# EUROPEAN PATENT APPLICATION

(11) **EP 4 528 604 A1**
(43) Date of publication of application: **26.03.2025**
(21) Application number: 23887179.2
(22) Date of filing: 28.07.2023
(51) Int. Cl.: G06N 20/00, G06F 16/28, G06N 3/04, G06N 3/063, G06F 7/544, G06F 7/76

(54) **DATA MODEL ADJUSTMENT METHOD AND APPARATUS, AND MODEL CONSTRUCTION METHOD AND APPARATUS**

(71) Applicant: VeriSilicon Microelectronics (Chengdu) Co., Ltd., Chengdu, Sichuan 610041 (CN); VeriSilicon Microelectronics (Shanghai) Co., Ltd., Shanghai 201203 (CN); VeriSilicon Microelectronics (Nanjing) Co., Ltd., Nanjing, Jiangsu 211500 (CN); VeriSilicon Technology (Shanghai) Co., Ltd., Shanghai 201306 (CN); Verisilicon Microelectronics (Hainan) Co., Ltd., Haikou, Hainan 570208 (CN)
(72) Inventor: ZHANG, Xiang, Chengdu Sichuan 610041 (CN); LI, Yuenan, Chengdu Sichuan 610041 (CN); CHEN, Feiyue, Chengdu Sichuan 610041 (CN); DU, Di, Chengdu Sichuan 610041 (CN); YANG, Jin, Chengdu Sichuan 610041 (CN); YANG, Zongwu, Chengdu Sichuan 610041 (CN)
(74) Representative: Von Rohr Patentanwälte Partnerschaft mbB
(86) International application number: PCT/CN2023/109980
(87) International publication number: WO 2025/024998

(57) **Abstract**

The present disclosure relates to the field of data processing, and specifically, it relates to a data model adjustment method and device, model construction method and device, electronic device, and computer-readable storage medium. The data model adjustment method includes obtaining the target tensor-reshape operator and target tensor-transpose operator in the target data model; determining whether the target tensor-reshape operator and the target tensor-transpose operator satisfy exchange condition; exchanging, if the target tensor-reshape operator and the target tensor-transpose operator satisfy the exchange condition, the operation order of the target tensor-reshape operator and the target tensor-transpose operator in the target data model; and adjusting the operator expression of the tensor-transpose operator. Compared to existing technologies, the data model adjustment method and device, model construction method and device, electronic device, and computer-readable storage medium provided in the embodiments of the present disclosure have the advantages of being able to adjust data models, minimizing the impact on data models, and improving operational efficiency of the data models.

## Description

### Technical Field

The present disclosure relates to the field of data processing, and specifically, relates to a data model adjustment method and device, model construction method and device, electronic device, and computer-readable storage medium.

### Background Art

At present, with the rise of artificial intelligence, various data models are increasingly applied in scenarios such as speech recognition, image recognition, and facial recognition. In various data models, target tensor-transpose operators and target tensor-reshape operators are widely used as common operator types. However, in various existing data models, a large number of target tensor-transpose operators and target tensor-reshape operators are used alternatively, seriously affecting the operational efficiency of data models.

### Summary

The objective of the present disclosure is to provide a data model adjustment method and device, a model construction method and device, electronic device, and computer-readable storage media that can adjust data models, and enhance the operational efficiency of data models while minimizing the impact on data models.

In the first aspect, the present disclosure provides a data model adjustment method, comprising obtaining a target tensor-reshape operator and a target tensor-transpose operator in a target data model, wherein the target tensor-reshape operator is a tensor-reshape operator whose operation order is located between two tensor-transpose operators, and the target tensor-transpose operator is either one of the two tensor-transpose operators, or the target tensor-transpose operator is a tensor-transpose operator whose operation order is located between two tensor-reshape operators, and the target tensor-reshape operator is either one of the two tensor-reshape operators; determining whether the target tensor-reshape operator and the target tensor-transpose operator satisfy exchange condition; exchanging, if the target tensor-reshape operator and the target tensor-transpose operator satisfy the exchange condition, the operation orders of the target tensor-reshape operator and the target tensor-transpose operator in the target data model; adjusting the operator expression of the tensor-transpose operator so that the operation results remain unchanged before and after the exchange of operation orders of the target tensor-reshape operator and the target tensor-transpose operator.

Compared to the prior art, in the data model adjustment method provided in the embodiments of the present disclosure, when one tensor-reshape operator in the target data model is located between two tensor-transpose operators, or when one tensor-transpose operator is located between two tensor-reshape operators, the method comprises obtaining the target tensor-reshape operator and target tensor-transpose operator in such cases, determining whether the target tensor-reshape operator and the target tensor-transpose operator satisfy the exchange condition, and if the target tensor-reshape operator and the target tensor-transpose operator satisfy the exchange condition, exchanging the operation orders of the target tensor-reshape operator and target tensor-transpose operator in the target data model, which makes the operation orders of two tensor-reshape operators adjacent or the operation orders of two tensor-transpose operators adjacent, thereby making calculations for tensor-reshape operators and tensor-transpose operators more convenient and improving the overall operational efficiency of the data model. Additionally, after exchanging the operation orders of the target tensor-reshape operator and target tensor-transpose operator, the operator expression of the tensor-transpose operator is adjusted so that the operation result remains unchanged, thereby reducing the impact of exchanging the operation orders of the target tensor-reshape operator and target tensor-transpose operator on the data model.

In optional embodiments, the step of determining whether the target tensor-reshape operator and the target tensor-transpose operator satisfy exchange condition comprises obtaining an input tensor and an output tensor of the target tensor-reshape operator, wherein the input tensor comprises multiple input tensor dimension values and the output tensor comprises multiple output tensor dimension values; determining multiple data dimension mapping groups corresponding to the target tensor-reshape operator based on the input tensor and the output tensor, wherein each data dimension mapping group comprises the corresponding relationship between several input tensor dimension values and several output tensor dimension values; and determining whether the target tensor-reshape operator and the target tensor-transpose operator satisfy the exchange condition based on the multiple data dimension mapping groups and the target tensor-transpose operator.

In optional embodiments, the step of determining whether the target tensor-reshape operator and the target tensor-transpose operator satisfy the exchange condition based on the multiple data dimension mapping groups and the target tensor-transpose operator comprises determining whether the tensor-transpose operation corresponding to the target tensor-transpose operator is the transpose operation between groups of the multiple data dimension mapping groups; determining that, if the tensor-transpose operation corresponding to the target tensor-transpose operator is the transpose operation between groups of the multiple data dimension mapping groups, the target tensor-reshape operator and the target tensor-transpose operator satisfy the exchange condition; and determining that, if the tensor-transpose operation corresponding to the target tensor-transpose operator is not the transpose operation between groups of the multiple data dimension mapping groups, the target tensor-reshape operator and the target tensor-transpose operator do not satisfy the exchange condition.

In optional embodiments, the step of adjusting the operator expression of the target tensor-transpose operator comprises adjusting the operator expression of the target tensor-transpose operator based on the multiple data dimension mapping groups.

In optional embodiments, the step of adjusting the operator expression of the target tensor-transpose operator based on the multiple data dimension mapping groups comprises the operator expression of the target tensor-transpose operator comprising multiple transpose dimension values; changing, if the operation order of the target tensor-reshape operator is before the target tensor-transpose operator and the multiple transpose dimension values correspond one-to-one with the output tensor dimension values, the multiple transpose dimension values to input tensor dimension values corresponding to the multiple transpose dimension values based on the data dimension mapping groups.

In optional embodiments, the step of adjusting the operator expression of the target tensor-transpose operator based on the multiple data dimension mapping groups further comprises changing, if the operation order of the target tensor-reshape operator is after the target tensor-transpose operator and the multiple transpose dimension values correspond one-to-one with the input tensor dimension values, the multiple transpose dimension values to output tensor dimension values corresponding to the multiple transpose dimension values based on the data dimension mapping groups.

In optional embodiments, the step of determining multiple data dimension mapping groups corresponding to the target tensor-reshape operator based on the input tensor and the output tensor comprises performing successive division operations on the multiple input tensor dimension values and the multiple output tensor dimension values to obtain the multiple data dimension mapping groups.

In optional embodiments, the target data model comprises neural network models, machine learning models, and decision tree models.

In the second aspect, the present disclosure provides a data model construction method, comprising constructing the target data model based on a preset model framework, wherein the target data model comprises multiple tensor-transpose operators and multiple tensor-reshape operators; and adjusting the orders of the multiple tensor-transpose operators and tensor-reshape operators based on the data model adjustment method as described in any of the foregoing embodiments.

In the third aspect, the present disclosure provides a data model adjustment device, comprising an operator acquisition module, wherein the operator acquisition module is configured for obtaining a target tensor-reshape operator and a target tensor-transpose operator in a target data model, wherein the target tensor-reshape operator is a tensor-reshape operator whose operation order is located between two tensor-transpose operators, and the target tensor-transpose operator is either one of the two tensor-transpose operators, or the target tensor-transpose operator is a tensor-transpose operator whose operation order is located between two tensor-reshape operators, and the target tensor-reshape operator is either one of the two tensor-reshape operators; a judgment module, wherein the judgment module is configured for determining whether the target tensor-reshape operator and the target tensor-transpose operator satisfy the exchange condition; and a data model adjustment module, wherein the data model adjustment module is configured for exchanging, if the target tensor-reshape operator and the target tensor-transpose operator satisfy the exchange condition, the operation orders of the target tensor-reshape operator and the target tensor-transpose operator in the target data model; and the data model adjustment module is further configured for adjusting the operator expression of the tensor-transpose operator so that the operation results remain unchanged after the exchange of operation orders of the target tensor-reshape operator and the target tensor-transpose operator.

In the fourth aspect, the present disclosure provides a data model construction device, comprising a model construction module, wherein the model construction module is configured for constructing the target data model based on a preset model framework, wherein the target data model comprises multiple tensor-transpose operators and multiple tensor-reshape operators; and a model adjustment module, wherein the model adjustment module is configured for adjusting the orders of the multiple tensor-transpose operators and tensor-reshape operators based on the data model adjustment method as described in any of the foregoing embodiments.

In the fifth aspect, the present disclosure provides an electronic device, comprising at least one processor; and a memory communicatively connected to the at least one processor, wherein the memory stores instructions that can be executed by the at least one processor, and the instructions are executed by the at least one processor to enable the at least one processor to perform any one of the data model adjustment methods as described in the preceding embodiments or the data model construction method as described in the preceding embodiment.

In the sixth aspect, the present disclosure provides a computer-readable storage medium storing a computer program, wherein the computer program is executed by a processor to implement any one of the data model adjustment methods as described in the preceding embodiments or the data model construction method as described in the preceding embodiment.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in art can also obtain other related drawings based on these drawings without inventive effort.
FIG. 1 is a schematic diagram of the process of the data model adjustment method provided in one of embodiments of the present disclosure;
FIG. 2 is a schematic diagram of the process of determining whether the target tensor-reshape operator and target tensor-transpose operator satisfy the exchange condition in the data model adjustment method provided in one of embodiments of the present disclosure;
FIG. 3 is a schematic diagram of several tensors in the data model adjustment method provided in one of embodiments of the present disclosure;
FIG. 4 is a schematic diagram of the process of the data model construction method provided in one of embodiments of the present disclosure;
FIG. 5 is a structural schematic diagram of the data model adjustment device provided in one of embodiments of the present disclosure;
FIG. 6 is a structural schematic diagram of the data model construction device provided in one of embodiments of the present disclosure; and
FIG. 7 is a structural schematic diagram of the electronic device provided in one of embodiments of the present disclosure.

### Detailed Description of Embodiments

In order to make the objective, technical solutions, and advantages of the embodiments of the present disclosure clearer, the following description will provide a clear and comprehensive explanation of the technical solutions in the embodiments of the present disclosure with reference to the drawings. Clearly, the described embodiments are part of the embodiments of the present disclosure and not the entire embodiments. The components of embodiments of the present disclosure which are generally described and illustrated in the drawings herein can be arranged and designed in a variety of different configurations.

Accordingly, the following detailed description of the embodiments of the present disclosure provided in the drawings is not intended to limit the scope of the claimed disclosure, but merely represents selected embodiments of the present disclosure. Based on the embodiments in the present disclosure, all other embodiments obtained by those of ordinary skill in the art without making inventive efforts are within the scope of protection of the present disclosure.

It should be noted that similar numerals and letters denote similar terms in the following drawings, so that once an item is defined in one drawing, it does not need to be further defined or explained in subsequent drawings.

In the description of the present disclosure, it should be noted that the orientation or position relationships indicated by the terms "up", "down", "inside", "outside", etc., if present, are the orientation or position relationships shown based on the attached drawings or the orientation or position relationships customarily placed in the use of the product of the present disclosure. It is only for the convenience of describing the present disclosure and simplifying its description, and does not indicate or imply that the device or element referred to must be in a specific orientation or be constructed and operated in a specific orientation, and thus should not be construed as limiting the present disclosure.

In addition, the terms such as "first", "second", are only used to distinguish the description and are not to be construed as indicating or implying relative importance.

It should be noted that the features in the embodiments of the present disclosure may be combined with each other without conflict.

A tensor is a type of multi-dimensional array that can be used for data access. The tensor-transpose operator is used for transposing dimensions of tensor data, allowing for the modification of the placement order of data in memory. The tensor-reshape operator can modify the shape of tensor data without altering the placement order of its data in memory. In practical applications, data is stored in storage devices, and based on different usage requirements, the stored data can be adjusted. For example, data distribution in stored data can be adjusted by modifying tensors, and such adjustments of the tensors can be achieved using data models composed of tensor-transpose operators and tensor-reshape operators. However, in existing data models, to achieve complex data distribution adjustments, it can comprise multiple tensor-transpose operators and multiple tensor-reshape operators, with the operation orders of the multiple tensor-transpose operators and multiple tensor-reshape operators interlacing each other. The operation process for one tensor comprises repeated tensor-transpose and tensor-reshape operations. For instance, for one tensor, it first undergoes an operation by tensor-transpose operator, followed by an operation by tensor-reshape operator, and then another operation by tensor-transpose operator follows, with subsequent multiple interleaved tensor-transpose and tensor-reshape operations. This reduces the operation efficiency of the data model.

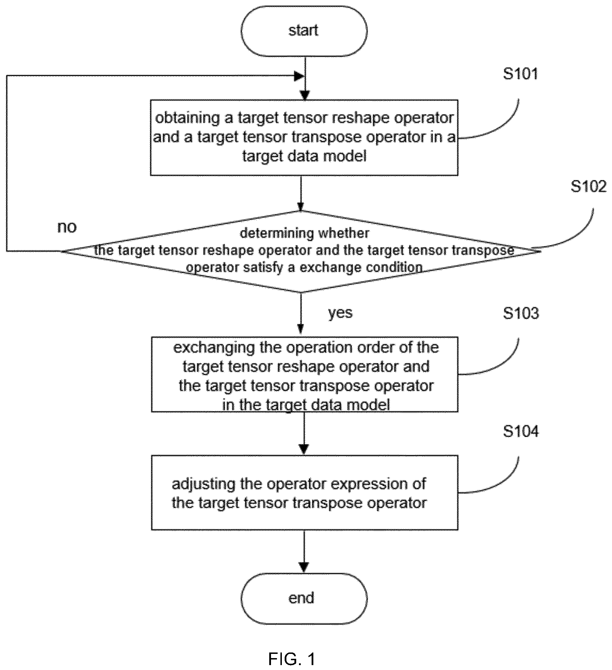

To address the above problem of reduced operation efficiency due to the interleaved operations between multiple tensor-transpose operators and multiple tensor-reshape operators, one embodiment of the present disclosure provides a data model adjustment method for adjusting operators in the data model. This method minimizes the impact on the operational results of the data model and improves the operational efficiency of the data model. The specific data model adjustment method is illustrated in FIG. 1 and comprises the following steps.

Step S101: obtaining the target tensor-reshape operator and target tensor-transpose operator in the target data model.

In this step, the target data model refers to the data model that needs adjustment. In various embodiments of the present disclosure, the target data model can be a model that is initially created and has not undergone data training, or can be a model that has already completed data training.

Furthermore, in various embodiments of the present disclosure, the target data model, for example, can be any one of various types of different data models, such as neural network models, machine learning models, decision tree models, and more.

The target data model comprises multiple tensor-transpose operators and multiple tensor-reshape operators, with these multiple tensor-transpose operators and multiple tensor-reshape operators interlaced between each other.

In this step, the target tensor-reshape operator and target tensor-transpose operator refer to the tensor-reshape operator and tensor-transpose operator within the target data model. In some embodiments of the present disclosure, the target tensor-reshape operator is a tensor-reshape operator whose operation order is located between two tensor-transpose operators, and the target tensor-transpose operator is either one of these two tensor-transpose operators. Taking tensor-transpose operator as A and tensor-reshape operator as B as an example, if the operation order between tensor-transpose operator A and tensor-reshape operator B is ABA, then the target tensor-reshape operator is the tensor-reshape operator B located between two tensor-transpose operators A, while the target tensor-transpose operator is either one of the two tensor-transpose operators A. After exchanging the target tensor-transpose operator and target tensor-reshape operator, the original operation order of ABA for tensor-transpose operator and tensor-reshape operator changes to AAB or BAA. In this case, the two tensor-transpose operators A are adjacent in the operation order, allowing them to be merged into a new tensor-transpose operator or to cancel each other out. Alternatively, in some other embodiments of the present disclosure, the target tensor-transpose operator is a tensor-transpose operator whose operation order is located between two tensor-reshape operators, and the target tensor-reshape operator is either one of the two tensor-reshape operators. Similarly, taking tensor-transpose operator as A and tensor-reshape operator as B as an example, if the operation order between tensor-transpose operator A and tensor-reshape operator B is BAB, then the target tensor-transpose operator is the tensor-transpose operator A located between two tensor-reshape operators B, while the target tensor-reshape operator is either one of the two tensor-reshape operators B. Similarly, after exchanging the target tensor-transpose operator and target tensor-reshape operator, the original operation order of BAB for tensor-transpose operator and tensor-reshape operator changes to ABB or BBA. In this case, the two tensor-reshape operators B are adjacent in the operation order, allowing them to be merged into a new tensor-reshape operator or to cancel each other out.

In some embodiments of the present disclosure, the aforementioned tensor-transpose operators and tensor-reshape operators can be the tensor-transpose operators and tensor-reshape operators originally present in the data model, or they can be tensor-transpose operators and tensor-reshape operators obtained after adjusted by the data model adjustment method provided by embodiments of the present disclosure. For example, the original multiple tensor-transpose operators and tensor-reshape operators are ABABA, wherein "ABA" is changed to BAA after the order adjustment through the data model adjustment method provided by the embodiment of the present disclosure. The adjacent tensor-transpose operators AA can be merged into a single tensor-transpose operator A. Therefore, the original ABABA is changed to BAABA, and after merging, it becomes BABA. Furthermore, the "BAB" can undergo further order adjustments and operator merging or cancellation.

Furthermore, in some embodiments of the present disclosure, the target tensor-reshape operator and target tensor-transpose operator can be directly adjacent to each other.

Step S102: determining whether the target tensor-reshape operator and the target tensor-transpose operator satisfy the exchange condition; if they do, proceeding to step S103; and if not, returning to step S101.

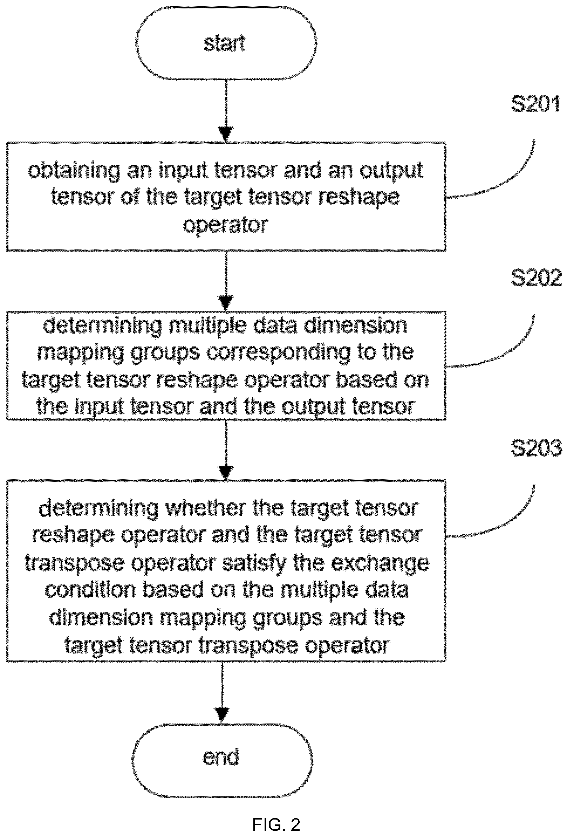

As shown in FIG. 2, this step can comprise several sub-steps as illustrated in FIG. 2, specifically comprising the following steps.

Step S201: obtaining an input tensor and an output tensor of the target tensor-reshape operator.

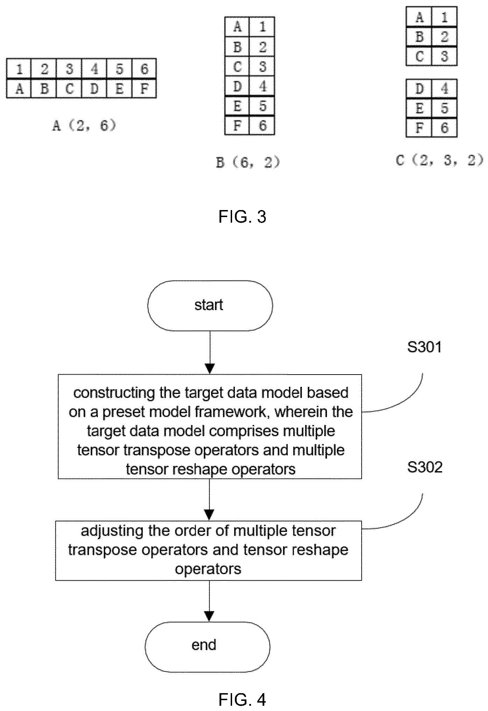

In this step, the input tensor is the tensor that the target tensor-reshape operator needs to perform the reshape operation. The input tensor can comprise multiple input tensor dimension values. The output tensor is the tensor obtained by the target tensor-reshape operator after performing the reshape operation on the input tensor. The output tensor can comprise multiple output tensor dimension values. As shown in FIG. 3, tensor A (2, 6) is changed into tensor B (6, 2) through tensor-transpose operator operation, and tensor B (6, 2) is then changed into tensor C (2, 3, 2) through tensor-reshape operator operation. Using FIG. 3 as an example, the input tensor can be, for instance, tensor B (6, 2) as shown in FIG. 3, with input tensor dimensions of 6 and 2. The output tensor can be, for example, tensor C (2, 3, 2) as shown in FIG. 3, with output tensor dimensions of 2, 3, and 2.

Step S202: determining multiple data dimension mapping groups corresponding to the target tensor-reshape operator based on the input tensor and the output tensor.

In this step, the data reshape operator, from a semantic perspective, essentially rearranges and recombines the data dimensions of the input tensor, thereby altering the spatial information of data access to obtain the output tensor. Data dimension mapping groups are used to define the transformation relationships between the dimensions of the input tensor and the output tensor. The mapping relationships between the multiple input tensor dimension values of the input tensor and the multiple output tensor dimension values of the output tensor can comprise the following types.

Direct Mapping: No tensor reshaping is involved, and the dimension information has been preserved. For example, between the input tensor (2, 2, 100, 128) and the output tensor (4, 10, 10, 128), those that conform to a direct mapping relationship are the input tensor dimension value 128 and the output tensor dimension value 128.

Merge Mapping: Multiple dimensions are combined into a single output dimension. For instance, between the input tensor (2, 2, 100, 128) and the output tensor (4, 10, 10, 128), those that conform to a merge mapping relationship are the input tensor dimension values 2 and 2, and the output tensor dimension value 4.

Split Mapping: A single dimension is split into multiple output dimensions. For example, between the input tensor (2, 2, 100, 128) and the output tensor (4, 10, 10, 128), those that conform to a split mapping relationship are the input tensor dimension value 100 and the output tensor dimension values 10 and 10.

Merge plus Split Mapping: Multiple dimensions exhibit various mapping relationships. For instance, between the input tensor (3, 5, 7, 11) and the output tensor (21, 5, 11), those that conform to a split mapping relationship are the input tensor dimension values 3, 5, and 7, and the output tensor dimension values 21 and 5.

In this step, each data dimension mapping group comprise mapping relationships between multiple input tensor dimension values and multiple output tensor dimension values. That is, mapping relationships between input tensor dimension values and output tensor dimension values that conform to the mapping relationships mentioned above are constructed to serve as a data dimension mapping group. For example, between the input tensor (2, 2, 100, 128) and the output tensor (4, 10, 10, 128), this comprises data dimension mapping group G0 = (in: {0, 1}, out: {0}), data dimension mapping group G1 = (in: {2}, out: {1, 2}), and data dimension mapping group G2 = (in: {3}, out: {3}). The data dimension mapping group G0 = (in: {0, 1}, out: {0}) represents the mapping relationship of the first input tensor dimension value (indexed as 0) and the second input tensor dimension value (indexed as 1) in the input tensor to the first output tensor dimension value (indexed as 0) in the output tensor. The data dimension mapping group G1 = (in: {2}, out: {1, 2}) represents the mapping relationship of the third input tensor dimension value (indexed as 2) in the input tensor to the second output tensor dimension value (indexed as 1) and the third output tensor dimension value (indexed as 2) in the output tensor. The data dimension mapping group G2 = (in: {3}, out: {3}) represents the mapping relationship between the fourth input tensor dimension value (indexed as 3) of the input tensor to the fourth output tensor dimension value (indexed as 3) of the output tensor.

In some embodiments of the present disclosure, it is able to perform successive division operations on the multiple input tensor dimension values and the multiple output tensor dimension values to obtain the multiple data dimension mapping groups. For the input tensor (K1, K2, K3, K4, K5) and output tensor (R1, R2, R3), the successive division operation can comprise the following steps.

s1: obtaining the first input tensor dimension value K1 from the input tensor and the first output tensor dimension value R1 from the output tensor; and calculating the quotient Q1 and the remainder W1 between K1 and R1 by taking the larger value between K1 and R1 as the numerator and the smaller value as the denominator. For example, if K1<R1, then R1 ÷ K1 = Q1...W1.

s2: if the remainder W1 is 0 and the quotient Q1 is not equal to 1, then obtaining the second tensor dimension value in the tensor whose tensor dimension value serves as the denominator: if the numerator is R1 and the denominator is K1, then obtaining the second input tensor dimension value K2 from the input tensor; and conversely, if the numerator is K1 and the denominator is R1, then obtaining the second output tensor dimension value R2 from the output tensor. Using the example of obtaining the second input tensor dimension value K2 from the input tensor, in this step, the quotient Q2 and the remainder W2 between K2 and Q1 are further calculated by taking the larger value between K2 and Q1 as the numerator and the smaller value as the denominator.

s3: if the remainder W1 is not 0 and the quotient Q1 is not equal to 1, then obtaining the second input tensor dimension value K2 and the second output tensor dimension value R2; and calculating the quotient Q2 and remainder W2 between K1*K2 and R1*R2.

s4: if the remainder W1 is not 0 and the quotient Q1 is equal to 1, then calculating the product (K1*R1) of numerator K1 and denominator R1, and obtaining the second tensor dimension value from the tensor to which the denominator belongs. In the case of K1<R1, for example, the second output tensor dimension value R2 is obtained, and the quotient Q2 and remainder W2 between K1*R1 and R2 are calculated.

s5: repeatedly executing steps s2 to s4 until the quotient is 1 and the remainder is 0; and outputting a data dimension mapping group G0= (in: {0, 1......}, out: {0, 1......}), where 0, 1...... represents the order numbering of obtained input tensor dimension values and output tensor dimension values.

s6: sequentially re-obtaining new input tensor dimension values and output tensor dimension values, and continuing to perform steps s2 to s5 until all input tensor dimension values and output tensor dimension values are calculated.

In the example of performing the successive division operations for the input tensor (2, 2, 10, 10, 128) and the output tensor (4, 100, 128), first, s1 is executed, which calculates the quotient 2 and remainder 0 between input tensor dimension value 2 and output tensor dimension value 4. Then s2 is executed, which calculates the quotient 1 and remainder 0 between the quotient 2 and the second input tensor dimension value 2. At this point, s5 is executed, resulting in the data dimension mapping group G0= (in: {0, 1}, out: {0}) being output. Then, new input tensor dimension values such as 10 and output tensor dimension values such as 100...... are sequentially re-obtained, and the data dimension mapping group G1= (in: {2, 3}, out: {1}) and the data dimension mapping group G2= (in: {4}, out: {2}) are outputted.

In the example of performing the successive division operations for the input tensor (3, 5, 7, 11) and the output tensor (21, 5, 11), first, s1 is executed, which calculates the quotient 7 and remainder 0 between input tensor dimension value 2 and output tensor dimension value 21. Then s2 is executed, which calculates the quotient 1 and remainder 2 between the quotient 7 and the second input tensor dimension value 5. Then s4 is executed, which calculates the product 35 between the quotient 7 and the second input tensor dimension value 5; obtains the second output tensor dimension value 5; and calculates the quotient 7 and remainder 0 between the product 35 and the second output tensor dimension value 5. Then s2 is executed, which calculates the quotient 1 and remainder 0 between the quotient 7 and the third input tensor dimension value 7. Then s5 is executed, which outputs the data dimension mapping group G0= (in: {0, 1, 2}, out: {0, 1}). Then, new input tensor dimension value 11 and output tensor dimension value 11...... are sequentially re-obtained, so as to output the data dimension mapping group G1= (in: {3}, out: {2}).

Step S203: determining whether the target tensor-reshape operator and the target tensor-transpose operator satisfy the exchange condition based on the multiple data dimension mapping groups and the target tensor-transpose operator.

In this step, the target tensor-transpose operator can be applied to determine whether the tensor-transpose operation corresponding to the target tensor-transpose operator is a transpose operation between multiple data dimension mapping groups. If the tensor-transpose operation corresponding to the target tensor-transpose operator is the transpose operation between groups of the multiple data dimension mapping groups, it is determined that the target tensor-reshape operator and the target tensor-transpose operator satisfy the exchange condition. On the contrary, if the tensor-transpose operation corresponding to the target tensor-transpose operator is not the transpose operation between groups of the multiple data dimension mapping groups, it is determined that the target tensor-reshape operator and the target tensor-transpose operator do not satisfy the exchange condition.

The transpose operation between multiple data dimension mapping groups refers to the overall transpose operation among the input tensor dimension values corresponding to each data dimension mapping group. Taking the target tensor-transpose operator {2, 3, 0, 1, 4} as an example, the target tensor-transpose operator {2, 3, 0, 1, 4} means transforming the order of tensor dimension values {0, 1, 2, 3, 4} in the tensor to the order of the target tensor-transpose operator {2, 3, 0, 1, 4}. Specifically, it moves the first tensor dimension value to the third position, the second tensor dimension value to the fourth position, the third tensor dimension value to the first position, and the fourth tensor dimension value to the second position, and keeps the position of the fifth tensor dimension value unchanged. This means combining the first tensor dimension value and the second tensor dimension value as one entirety, treating the third tensor dimension value and the fourth tensor dimension value as one entirety, and then changing their positions.

If at this point, the corresponding data dimension mapping groups are G0= (in: {0, 1}, out: {0}), G1= (in: {2, 3}, out: {1}), and G2= (in: {4}, out: {2}), then the input tensor dimension values corresponding to data dimension mapping group G0 are the first tensor dimension value and the second tensor dimension value, while the input tensor dimension values corresponding to data dimension mapping group G1 are the third tensor dimension value and the fourth tensor dimension value. In this case, the tensor-transpose operation corresponding to the target tensor-transpose operator {2, 3, 0, 1, 4} is the transpose operation between groups of the data dimension mapping groups G0 and G1, and then it is determined that the target tensor-reshape operator and the target tensor-transpose operator satisfy the exchange condition.

If at this point, the corresponding data dimension mapping groups are G0= (in: {0, 1}, out: {0}), G1= (in: {2}, out: {1, 2}), and G2= (in: {4}, out: {3}), then the input tensor dimension values corresponding to data dimension mapping group G0 are the first tensor dimension value and the second tensor dimension value, while the input tensor dimension values corresponding to data dimension mapping group G1 are the third tensor dimension value. In this case, the tensor-transpose operation corresponding to the target tensor-transpose operator {2, 3, 0, 1, 4} is not the transpose operation between groups of the data dimension mapping groups G0, G1, and G2, and then it is determined that the target tensor-reshape operator and the target tensor-transpose operator do not satisfy the exchange condition.

Step S103: exchanging the operation orders of the target tensor-reshape operator and the target tensor-transpose operator in the target data model.

Step S104: adjusting the operator expression of the tensor-transpose operator.

In this step, the objective of adjusting the operator expression of the tensor-transpose operator is to ensure that the operation results of the target tensor-reshape operator and the target tensor-transpose operator remain unchanged after the exchange of the operation orders. Specifically, the adjustment of the operator expression of the target tensor-transpose operator can be based on the multiple data dimension mapping groups.

Furthermore, in some embodiments of the present disclosure, the operator expression of the target tensor-transpose operator comprises multiple transpose dimension values. For example, in the aforementioned target tensor-transpose operator {2, 3, 0, 1, 4}, the values 2, 3, 0, 1, and 4 represent the transpose dimension values.

If the operation order of the target tensor-reshape operator is before that of the target tensor-transpose operator, that is, the target tensor-reshape operator operation is performed first, followed by the target tensor-transpose operator operation, in this case, when multiple transpose dimension values correspond one-to-one with the output tensor dimension values, according to the data dimension mapping groups, the multiple transpose dimension values are changed to the input tensor dimension values that corresponds to the multiple transpose dimension values. For example, for a tensor (10, 10, 2, 2, 128), first it is performed by the target tensor-reshape operator operation, resulting in the tensor (100, 4, 128), and then the tensor (100, 4, 128) is performed by the target tensor-transpose operator operation to obtain a tensor (4, 100, 128). In this case, the multiple data dimension mapping groups corresponding to the target tensor-reshape operator are respectively G0 = (in: {0, 1}, out: {0}), G1 = (in: {2, 3}, out: {1}), and G2 = (in: {4}, out: {2}). The output tensor dimension values corresponding to the target tensor-reshape operator are 100, 4, and 128. The target tensor-transpose operator is {1, 0, 2}, and the transpose dimension values are 1, 0, and 2. According to the data dimension mapping groups, multiple transpose dimension values are changed to the input tensor dimension values corresponding to the multiple transpose dimension values, which means converting the transpose dimension value 1 to the corresponding input tensor dimension values 2 and 3 in data dimension mapping group G1 = (in: {2, 3}, out: {1}), converting the transpose dimension value 0 to the corresponding input tensor dimension values 0 and 1 in data dimension mapping group G0 = (in: {0, 1}, out: {0}), and converting the transpose dimension value 2 to the corresponding input tensor dimension value 4 in data dimension mapping group G2= (in: {4}, out: {2}). Therefore, the rewritten tensor expression for the target tensor-transpose operator {1, 0, 2} becomes {2, 3, 0, 1, 4}.

If the operation order of the target tensor-reshape operator is after the target tensor-transpose operator, the target tensor-transpose operator operation is performed first, followed by the target tensor-reshape operator operation, in this case, when multiple transpose dimension values correspond one-to-one with the input tensor dimension values, according to the data dimension mapping groups, the multiple transpose dimension values are changed to the output tensor dimension values that corresponds to the multiple transpose dimension values. For example, for the tensor (10, 10, 2, 2, 128), first it is performed by the target tensor-transpose operator operation to obtain the tensor (2, 2, 10, 10, 128), and then the tensor (2, 2, 10, 10, 128) is performed by the target tensor-reshape operator operation to obtain the tensor (4, 100, 128). In this case, the multiple data dimension mapping groups corresponding to the target tensor-transpose operator are respectively G0= (in: {0, 1}, out: {0}), G1= (in: {2, 3}, out: {1}), and G2= (in: {4}, out: {2}). The input tensor dimension values corresponding to the target tensor-reshape operator are 2, 2, 10, 10, and 128. The target tensor-transpose operator is {2, 3, 0, 1, 4}, where the transpose dimension values are 2, 3, 0, 1, and 4. According to the data dimension mapping groups, multiple transpose dimension values are changed to the output tensor dimension values corresponding to the multiple transpose dimension values, which means converting the transpose dimension values 2 and 3 to the corresponding output tensor dimension value 1 in data dimension mapping group G1 = (in: {2, 3}, out: {1}), converting the transpose dimension values 0 and 1 to the corresponding output tensor dimension value 0 in data dimension mapping group G0 = (in: {0, 1}, out: {0}), and converting the transpose dimension value 2 to the corresponding output tensor dimension value 4 in data dimension mapping group G2 = (in: {4}, out: {2}). Therefore, the rewritten tensor expression for the target tensor-transpose operator {2, 3, 0, 1, 4} becomes {1, 0, 2}.

Compared to the existing technology, in the data model adjustment method provided in the embodiments of the present disclosure, when one tensor-reshape operator in the target data model is located between two tensor-transpose operators, or when one tensor-transpose operator is located between two tensor-reshape operators, the method comprises obtaining the target tensor-reshape operator and target tensor-transpose operator in such cases, determining whether the target tensor-reshape operator and the target tensor-transpose operator satisfy the exchange condition, and if the target tensor-reshape operator and the target tensor-transpose operator satisfy the exchange condition, exchanging the operation orders of the target tensor-reshape operator and target tensor-transpose operator in the target data model. This results in adjacent operation orders of two tensor-reshape operators or adjacent operation orders of two tensor-transpose operators, thereby making calculations for tensor-reshape operators and tensor-transpose operators more convenient and improving the overall operational efficiency of the data model. Additionally, after exchanging the operation orders of the target tensor-reshape operator and target tensor-transpose operator, the operator expression of the tensor-transpose operator is adjusted so that the operation result remains unchanged, thereby reducing the impact of exchanging the operation orders of the target tensor-reshape operator and target tensor-transpose operator on the data model.

As shown in FIG. 4, another embodiment of the present disclosure provides a data model construction method, comprising the following steps.

Step S301: constructing the target data model based on a preset model framework, wherein the target data model comprises multiple tensor-transpose operators and multiple tensor-reshape operators.

In this step, a corresponding preset model framework can be used according to the model type of the target data model. For instance, if the target data model is a neural network model, a corresponding neural network model framework that comprises input layer, multiple hidden layers, and output layer can be used to construct the target data model.

Step S302: adjusting the orders of multiple tensor-transpose operators and tensor-reshape operators.

In this step, the data model adjustment method described in the previous embodiments can be employed to adjust the orders of multiple tensor-transpose operators and multiple tensor-reshape operators in the target data model.

Compared to existing technologies, in the data model construction method provided by the embodiments of the present disclosure, after constructing the target data model using a preset model framework, the data model adjustment method described in the previous embodiments is used to adjust the orders of multiple tensor-transpose operators and tensor-reshape operators in the target data model. This can improve the operational efficiency of the constructed target data model.

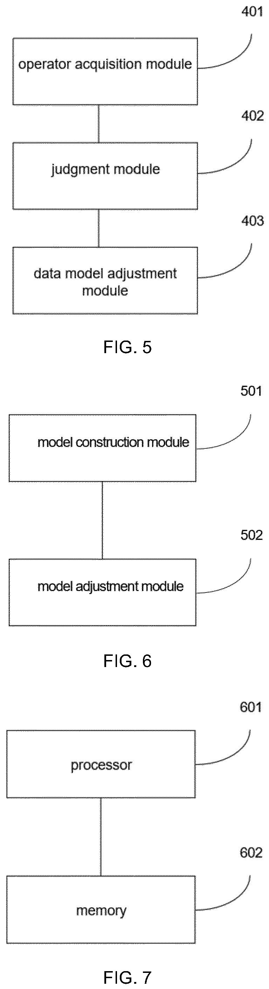

As shown in FIG. 5, another embodiment of the present disclosure provides a data model adjustment device, comprising an operator acquisition module 401, wherein the operator acquisition module 401 is configured for obtaining a target tensor-reshape operator and a target tensor-transpose operator in a target data model, wherein the target tensor-reshape operator is a tensor-reshape operator whose operation order is located between two tensor-transpose operators, and the target tensor-transpose operator is either one of the two tensor-transpose operators, or the target tensor-transpose operator is a tensor-transpose operator whose operation order is located between two tensor-reshape operators, and the target tensor-reshape operator is either one of the two tensor-reshape operators; a judgment module 402, wherein the judgment module 402 is configured for determining whether the target tensor-reshape operator and the target tensor-transpose operator satisfy exchange condition; and a data model adjustment module 403, wherein the data model adjustment module 403 is configured for exchanging, if the target tensor-reshape operator and the target tensor-transpose operator satisfy the exchange condition, the operation orders of the target tensor-reshape operator and the target tensor-transpose operator in the target data model; and the data model adjustment module is further configured for adjusting the operator expression of the tensor-transpose operator so that the operation results of the target tensor-reshape operator and the target tensor-transpose operator remain unchanged after the exchange of the operation orders.

Compared to the existing technology, in the data model adjustment device provided in the embodiments of the present disclosure, when one tensor-reshape operator in the target data model is located between two tensor-transpose operators, or when one tensor-transpose operator is located between two tensor-reshape operators, the operator acquisition module 401 obtains the target tensor-reshape operator and target tensor-transpose operator in such cases, the judgment module 402 determines whether the target tensor-reshape operator and the target tensor-transpose operator satisfy the exchange condition, and if the target tensor-reshape operator and the target tensor-transpose operator satisfy the exchange condition, and the data model adjustment module 403 exchanges the operation orders of the target tensor-reshape operator and target tensor-transpose operator in the target data model. This results in adjacent operation orders of two tensor-reshape operators or adjacent operation orders of two tensor-transpose operators, thereby making calculations for tensor-reshape operators and tensor-transpose operators more convenient and improving the overall operational efficiency of the data model. Additionally, after exchanging the operation orders of the target tensor-reshape operator and target tensor-transpose operator, the data model adjustment module 403 further adjusts the operator expression of the tensor-transpose operator so that the operation result remains unchanged, thereby reducing the impact of exchanging the operation orders of the target tensor-reshape operator and target tensor-transpose operator on the data model.

As shown in FIG. 6, another embodiment of the present disclosure provides a data model construction device, comprising a model construction module 501, wherein the model construction module 501 is configured for constructing the target data model based on a preset model framework, wherein the target data model comprises multiple tensor-transpose operators and multiple tensor-reshape operators; and a model adjustment module 502, wherein the model adjustment module 502 is configured for adjusting the orders of the multiple tensor-transpose operators and tensor-reshape operators based on the data model adjustment method provided in the foregoing embodiments.

Compared to existing technologies, in the data model construction device provided by the embodiments of the present disclosure, after the model construction module 501 constructs the target data model using a preset model framework, the model adjustment module 502 applies the data model adjustment method described in the previous embodiments to adjust the orders of the multiple tensor-transpose operators and tensor-reshape operators in the target data model. This can improve the operational efficiency of the constructed target data model.

Regarding the data model in the above embodiments, in some embodiments, the data model can be a model used in different fields to perform corresponding tasks, and the data model can be applied to multiple different fields. Multiple different fields, for example, comprise but are not limited to the fields of image processing, speech processing, and Natural Language Processing (NLP), among others.

Similarly, regarding the input tensors in the aforementioned embodiments, they can be data to be processed corresponding to the relevant fields. For example, input tensors can comprise, but are not limited to, images to be processed, speech to be processed, text to be processed, and so on.

As shown in FIG. 7, another embodiment of the present disclosure provides an electronic device, comprising at least one processor 601; and a memory 602 communicatively connected to the at least one processor 601, wherein the memory 602 stores instructions that can be executed by the at least one processor 601, and the instructions are executed by the at least one processor 601 to enable the at least one processor 601 to perform the data model adjustment method or the data model construction method in the preceding embodiments.

The memory and processor are connected via a bus, and the bus can comprise any number of interconnected buses and bridges, which links various circuits of one or more processors and memories together. The bus can also connect various other circuits together, such as peripheral devices, voltage regulators, and power management circuits. The above is well known in the art. Therefore, it will not be described further herein. The bus interface provides an interface between the bus and the transceiver. The transceiver can be a single component or multiple components, such as multiple receivers and transmitters, providing units for communicating with various other devices on the transmission medium. Data processed by the processor is transmitted on the wireless medium via antennas. Furthermore, the antennas also receive data and transmit it to the processor.

The processor is responsible for managing the bus and regular processing, and it can also provide various functions, comprising timing, peripheral interfaces, voltage regulation, power management, and other control functions. The memory can be configured to store the data used by the processor during its operations.

Another embodiment of the present disclosure relates to a computer-readable storage medium storing a computer program. When the computer program is executed by a processor, it implements the above-mentioned method embodiments.

In other words, those skilled in the art can understand that all or some of the steps in the methods of the above embodiments can be completed by instructing the relevant hardware through a program. The program, stored in a storage medium, comprises multiple instructions to enable a device (which can be a microcontroller, chip, etc.) or a processor to execute all or some of the steps of the methods in the various embodiments of the present disclosure. The aforementioned storage media comprise various media that can store program code, such as USB drives, external hard drives, read-only memory (ROM), random access memory (RAM), disks, or optical discs.

The above is only a specific embodiment of the present disclosure, but the scope of protection of the present disclosure is not limited thereto. Any person skilled in the art can easily envisage changes or substitutions within the technical scope disclosed in the present disclosure, which should be encompassed within the scope of protection of the present disclosure.

## Claims

1. A data model adjustment method, **characterized in that** the method comprises:
obtaining a target tensor-reshape operator and a target tensor-transpose operator in a target data model, wherein the target tensor-reshape operator is a tensor-reshape operator whose operation order is located between two tensor-transpose operators, and the target tensor-transpose operator is either one of the two tensor-transpose operators, or the target tensor-transpose operator is a tensor-transpose operator whose operation order is located between two tensor-reshape operators, and the target tensor-reshape operator is either one of the two tensor-reshape operators;
determining whether the target tensor-reshape operator and the target tensor-transpose operator satisfy an exchange condition;
exchanging, when the target tensor-reshape operator and the target tensor-transpose operator satisfy the exchange condition, operation orders of the target tensor-reshape operator and the target tensor-transpose operator in the target data model; and
adjusting an operator expression of the tensor-transpose operator so that operation results remain unchanged before and after an exchange of the operation orders of the target tensor-reshape operator and the target tensor-transpose operator.

2. The data model adjustment method according to claim 1, wherein the step of determining whether the target tensor-reshape operator and the target tensor-transpose operator satisfy an exchange condition comprises:
obtaining an input tensor and an output tensor of the target tensor-reshape operator, wherein the input tensor comprises multiple input tensor dimension values and the output tensor comprises multiple output tensor dimension values;
determining multiple data dimension mapping groups corresponding to the target tensor-reshape operator based on the input tensor and the output tensor, wherein each of the data dimension mapping groups comprises a corresponding relationship between several input tensor dimension values and several output tensor dimension values; and
determining whether the target tensor-reshape operator and the target tensor-transpose operator satisfy the exchange condition based on the multiple data dimension mapping groups and the target tensor-transpose operator.

3. The data model adjustment method according to claim 2, wherein the step of determining whether the target tensor-reshape operator and the target tensor-transpose operator satisfy the exchange condition based on the multiple data dimension mapping groups and the target tensor-transpose operator comprises:
determining whether a tensor-transpose operation corresponding to the target tensor-transpose operator is a transpose operation between groups of the multiple data dimension mapping groups;
determining that, when the tensor-transpose operation corresponding to the target tensor-transpose operator is the transpose operation between the groups of the multiple data dimension mapping groups, the target tensor-reshape operator and the target tensor-transpose operator satisfy the exchange condition; and
determining that, when the tensor-transpose operation corresponding to the target tensor-transpose operator is not the transpose operation between the groups of the multiple data dimension mapping groups, the target tensor-reshape operator and the target tensor-transpose operator do not satisfy the exchange condition.

4. The data model adjustment method according to claim 2, wherein the step of adjusting an operator expression of the target tensor-transpose operator comprises:
adjusting the operator expression of the target tensor-transpose operator based on the multiple data dimension mapping groups.

5. The data model adjustment method according to claim 4, wherein the step of adjusting the operator expression of the target tensor-transpose operator based on the multiple data dimension mapping groups comprises:
the operator expression of the target tensor-transpose operator comprising multiple transpose dimension values; and
changing, when an operation order of the target tensor-reshape operator is before the target tensor-transpose operator and the multiple transpose dimension values correspond one-to-one with the output tensor dimension values, the multiple transpose dimension values to the input tensor dimension values corresponding to the multiple transpose dimension values based on the data dimension mapping groups.

6. The data model adjustment method according to claim 5, the step of adjusting the operator expression of the target tensor-transpose operator based on the multiple data dimension mapping groups further comprises:
changing, when the operation order of the target tensor-reshape operator is after the target tensor-transpose operator and the multiple transpose dimension values correspond one-to-one with the input tensor dimension values, the multiple transpose dimension values to the output tensor dimension values corresponding to the multiple transpose dimension values based on the data dimension mapping groups.

7. The data model adjustment method according to claim 2, wherein the step of determining multiple data dimension mapping groups corresponding to the target tensor-reshape operator based on the input tensor and the output tensor comprises:
performing a successive division operation on the multiple input tensor dimension values and the multiple output tensor dimension values to obtain the multiple data dimension mapping groups.

8. The data model adjustment method according to any one of claims 1 to 7, wherein the target data model comprises neural network models, machine learning models, and decision tree models; and
the target data model is configured to adjust data layouts.

9. A data model construction method, **characterized in that** the method comprises:
constructing a target data model based on a preset model framework, wherein the target data model comprises multiple tensor-transpose operators and multiple tensor-reshape operators; and
adjusting orders of the multiple tensor-transpose operators and the multiple tensor-reshape operators based on the data model adjustment method according to any one of claims 1 to 8.

10. A data model adjustment device, **characterized in that** the device comprises:
an operator acquisition module, wherein the operator acquisition module is configured for obtaining a target tensor-reshape operator and a target tensor-transpose operator in a target data model, wherein the target tensor-reshape operator is a tensor-reshape operator whose operation order is located between two tensor-transpose operators, and the target tensor-transpose operator is either one of the two tensor-transpose operators, or the target tensor-transpose operator is a tensor-transpose operator whose operation order is located between two tensor-reshape operators, and the target tensor-reshape operator is either one of the two tensor-reshape operators;
a judgment module, wherein the judgment module is configured for determining whether the target tensor-reshape operator and the target tensor-transpose operator satisfy an exchange condition; and
a data model adjustment module, wherein the data model adjustment module is configured for exchanging, when the target tensor-reshape operator and the target tensor-transpose operator satisfy the exchange condition, operation orders of the target tensor-reshape operator and the target tensor-transpose operator in the target data model; and the data model adjustment module is further configured for adjusting an operator expression of the tensor-transpose operator so that operation results remain unchanged after an exchange of the operation orders of the target tensor-reshape operator and the target tensor-transpose operator.

11. A data model construction device, **characterized in that** the device comprises:
a model construction module, wherein the model construction module is configured for constructing a target data model based on a preset model framework, wherein the target data model comprises multiple tensor-transpose operators and multiple tensor-reshape operators; and
a model adjustment module, wherein the model adjustment module is configured for adjusting orders of the multiple tensor-transpose operators and the multiple tensor-reshape operators based on the data model adjustment method according to any one of claims 1 to 8.

12. An electronic device, **characterized by** comprising at least one processor; and a memory communicatively connected to the at least one processor, wherein the memory stores instructions that can be executed by the at least one processor, and the instructions are executed by the at least one processor to enable the at least one processor to perform the data model adjustment method according to any one of claims 1 to 8 or the data model construction method according to claim 9.

13. A computer-readable storage medium, **characterized by** storing a computer program, wherein the computer program is executed by a processor to implement the data model adjustment method according to any one of claims 1 to 8 or the data model construction method according to claim 9.
